# EUROPÄISCHE PATENTSCHRIFT

(11) **EP 0 978 343 B1**
(45) Veröffentlichungstag und Bekanntmachung des Hinweises auf die Patenterteilung: **20.08.2003**
(21) Anmeldenummer: 99103027.1
(22) Anmeldetag: 16.02.1999
(51) Int. Cl.: B23K 9/00, B23K 31/12

(54) **Verfahren zur Qualitätsprüfung von Schweissstellen**
Process for quality control of welded zones
Contrôle de qualité de zônes de soudage

(30) Priorität: 20.02.1998 DE 19807182
(43) Veröffentlichungstag der Anmeldung: 09.02.2000
(73) Patentinhaber: Bayerische Motoren Werke Aktiengesellschaft, 80788 München (DE)
(72) Erfinder: Schamberger, Dieter, 85296 Rohrbach (DE)

(56) Entgegenhaltungen:
- EP-A- 0 532 257
- FR-A- 2 634 096
- GB-A- 2 185 813
- US-A- 4 168 430
- US-A- 5 283 418
- US-A- 5 714 734

## Beschreibung

Die Erfindung bezieht sich auf ein Verfahren zur Qualitätsprüfung von Schweißstellen mit den Merkmalen des Oberbegriffs von Patentanspruch 1.

Ein derartiges Verfahren ist aus der US 5,283,418 A bekannt. Dabei werden die während des Schweißvorgangs auftretenden Parameter, wie Schweißstrom, Schweißspannung, Reinheit des Schutzgases sowie die während des Schweißvorgangs ausgesandte spektrale Strahlung berücksichtigt und aus den Parametern eine Information über die Qualität des jeweiligen Schweißvorgangs und insbesondere bei einer Schweißnaht Informationen über die Qualität dieser Naht gewonnen. Das bekannte Verfahren erfordert für seine Wirkungsweise einen erheblichen Aufwand, da eine Vielzahl von Parametern aufzunehmen ist und ein Vergleich jedes dieser Parameter mit entsprechenden Parameterwerten durchzuführen ist. Für einen Einsatz beim Punktschweißen, bei dem eine Vielzahl von Schweißpunkten zu prüfen ist, kann dieses Verfahren nur mit erheblichem Aufwand eingesetzt werden.

Der Erfindung liegt die Aufgabe zugrunde, ein Verfahren der eingangs genannten Art zu schaffen, das eine schnelle und sichere Aussage über die Qualität eines Schweißpunkts einerseits mit geringem Aufwand andererseits ermöglicht.

Die Erfindung löst diese Aufgabe durch die Merkmale des Patentanspruchs 1.

Es werden nunmehr lediglich zwei Kriterien berücksichtigt, nämlich eine Aussage über die Abmessung der Schweißstelle und eine Aussage über die optischen Eigenschaften der Schweißstelle. Beide Aussagen werden anhand von Farbänderungen entlang von Linien gewonnen, die meßtechnisch durch den Mittelpunkt gezogen werden.

Bei zwei Linien bilden diese vorzugsweise einen rechten Winkel zueinander. Damit wird die Schweißstelle in vier Quadranten ausgemessen. Ergänzend ist es möglich, mit einer entsprechend größeren Anzahl von Linien zu arbeiten. Auch diese Linien sollen wiederum durch den Mittelpunkt der Schweißstelle verlaufen. Es ist beispielsweise auch möglich, jede Schweißstelle in 16 Sektoren zu unterteilen, d. h. insgesamt 8 Linien durch den Mittelpunkt der Schweißstelle zu legen.

Aus den beiden Aussagen über die optischen Eigenschaften und die Abmessungen der Schweißstelle läßt sich damit sicher und schnell eine hinreichende Aussage über die Qualität jedes Schweißpunkts gewinnen.

Die Referenzbilder können, wie an sich aus der US 5,283,418 A bekannt, in einem Lernprozeß gespeichert werden. Auch ist es dabei vorteilhaft, wie an sich aus dieser Druckschrift bekannt, für die Auswertung der Refernzbilder ein wissensbasiertes System, z.B. ein neuronales Netz zu verwenden.

Die optischen Eigenschaften längs der Prüflinien können, wie an sich ebenfalls aus der eingangs genannten Druckschrift bekannt, die optischen Frequenzen sein. Im Gegensatz zum bekannten Verfahren werden diese Spektren aber nicht während des Schweißprozesses selbst, sondern im Nachhinein bei deutlich oder vollständig abgekühlter Temperatur der Schweißstelle aufgenommen. Diese Spektren sind gleich den Anlaßfarben, die sich an der jeweiligen Schweißstelle ergeben.

Mißt man diese Spektren entlang der Prüflinien, so können auch die Grauwerte der Anlaßfarben gewonnen und zum Vergleich herangezogen werden. Betrachtet man den Verlauf der Grauwerte entlang der Prüflinien, so zeigt dieser Verlauf in der Regel zwei charakteristische Extrema, die jeweils am Rande des Schweißpunkts auftreten. Damit kann aus dem Verlauf der Grauwerte über die Schweißstelle hinweg auch eine Aussage über die Abmessungen des Schweißpunkts selbst gewonnen werden. Damit kann auf eine separate Vermessung der Schweißstelle verzichtet werden.

Schließlich kann das Verfahren auch eingesetzt werden, wenn verschiedene Schweißpartner miteinander verbunden werden. Es ist in diesem Fall vorteilhaft, die Referenzbilder anhand der jeweiligen Schweißpartner aufzunehmen und für den jeweiligen individuellen Schweißvorgang zur Verfügung zu stellen.

Anhand der Zeichnung mit den Bildern 1 bis 6 ist die Erfindung weiter erläutert. Es zeigen:
Bilder 1-3 : Schematische Darstellung der Schritte 1-3 des Verfahrens.
Bild 4 : Das Verhalten der Grauwert zeigendes Diagramm.
Bild 5: Schweißpunkt mit 16 Prüflinien.
Bild 6 : Qualitätsbestimmung.

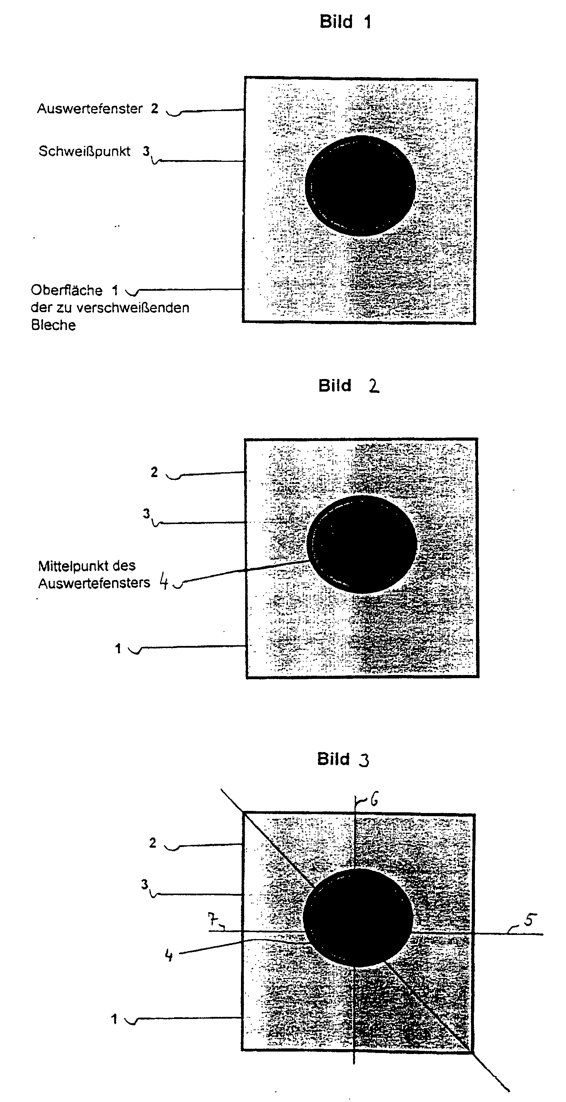

Auf einer Fläche 1 seien verschiedene Schweißpunkte angeordnet. In einem ersten Schritt wird mit Hilfe eines Fensters 2 ein Schweißpunkt 3 ausgewählt und optisch vergrößert dargestellt. Dies ist in Bild 1 dargestellt. Dabei ist zur Verdeutlichung die bildliche Darstellung des Schweißpunkts gegenüber der für die erfindungsgemäße Analyse vorgenommenen Vergrößerung noch weiter vergrößert.

In einem weiteren Schritt wird der Mittelpunkt 4 des Schweißpunkts 3 vorläufig bestimmt. Als Mittelpunkt wird dabei der geometrische Mittelpunkt des Auswertefensters angenommen. Anschließend werden eine Anzahl von Prüflinien, hier Linien 5, 6 und 7 durch diesen Mittelpunkt 4 hindurch gelegt. Dies geschieht zunächst programmtechnisch, d. h. es wird. der zunächst angenommene Mittelpunkt in der aus Bild 3 hervorgehenden Weise mit Prüflinien 5 bis 7 versehen.

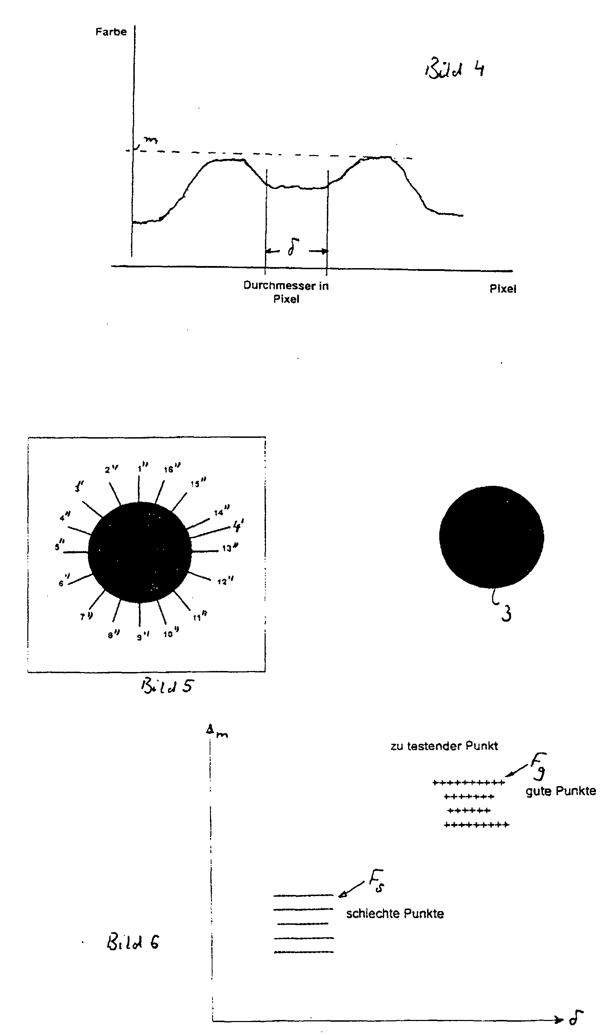

Längs der Prüflinien wird der Verlauf der Anlaßfarben bestimmt. Es ergibt sich dabei ein Verlauf, wie er im Prinzip in Bild 4 dargestellt ist. Dabei werden anstelle der Farbwerte selbst die daraus abgeleiteten Grauwerte verwendet. Jeder der längs der Prüflinien 5 bis 7 gewonnenen Grauwertekurven zeigt im Prinzip das aus Bild 4 zu entnehmende Verhalten. Zusätzlich zu zwei Maxima ist ein zwischen diesen gelegenes Plateau mit geringerem Grauwert festzustellen. Aus dem Vergleich der Verläufe dieser Kurven läßt sich das tatsächliche geometrische Mittel und damit der tatsächliche Mittelpunkt des Schweißpunkts 3 bestimmen. Nach der Bestimmung des tatsächlichen Mittelpunkts 4' werden nunmehr eine größere Anzahl von Prüflinien durch diesen Mittelpunkt gelegt und der Verlauf der Grauwerte längs dieser Prüflinien gemessen. Diese Prüflinien sind prinzipiell in Bild 5 dargestellt und dort mit Bezugsziffern 1"-16" versehen. Die Verläufe der Grauwerte längs dieser Prüflinien werden nunmehr miteinander derart in Beziehung gesetzt, daß ein gemittelter Verlauf daraus gewonnen wird. Dieser besitzt im Prinzip den aus Bild 4 zu entnehmenden Verlauf. Daraus werden nunmehr zwei Informationen gewonnen. Es handelt sich dabei um die Größe δ des Plateaus und den Maximalwert m der als Grauwert berücksichtigten Anlaßfarbe. Für jeden Schweißpunkt ergibt sich eine Relation dieses Maximalwerts m und des Wertes von δ, der nun für sämtliche Schweißpunkte in einem Diagramm, wie aus Bild 6 ersichtlich, eingetragen wird.

Aus einem vorangegangenen Lernprozeß mit einer Vielzahl von Schweißpunkten, deren Qualität beispielsweise auf konventionelle Weise mit Hammer und Meißel geprüft wird, lassen sich im Diagramm von Bild 6 Felder identifizieren, innerhalb derer die jeweiligen Schweißpunkte mit ihren Relationen Wert δ zu Farbe m (Maximalwert aus Bild 4) eindeutig als Schweißpunkte guter oder schlechter Qualität zu identifizieren sind. Diese Felder sind schematisch mit Fg bzw. Fs bezeichnet. Schweißpunkte, die zwischen den Feldgrenzen Fg und Fs liegen, sind von zweifelhafter Qualität und erfordern gegebenenfalls eine Nachbearbeitung.

Eine alternative Auswertung jedes Schweißpunktes verläuft wie folgt:

Nach der Bestimmung des Mittelpunktes 4' des Schweißpunkts (wie beschrieben) werden eine Anzahl von Prüflinien (in Bild 5 sind 16 Prüflinien dargestellt) durch den Mittelpunkt des Schweißpunktes gezogen und der Verlauf der Grauwertänderungen längs dieser Prüflinien ermittelt. Die Grauwertdarstellungen werden vor der Bearbeitung geglättet, um eine eindeutige Extremwertbetrachtung für jeden dieser (16) Vektoren zu ermöglichen. Die Darstellung jedes dieser Vektoren entspricht der in Bild 4 für den gemittelten Wert angegebenen. Die Extrema ( Maximum, Minimum) sowie Lage der Wendepunkte für jede dieser 16 Grauwertfunktionen werden zur Qualitätsentscheidung einem bereits vorher trainierten neuronalen Netz übergeben Aus einem vorangegangenem Lernprozeß mit einer angemessenen Zahl von Schweißpunkten für jede zu verschweißende Blechpaarung, deren Qualität beispielsweise auf konventionelle Weise durch Aufknöpfen und Vermessen der Schweißlinse geprüft wird. wird das Neuronale Netz mit einem entsprechenden mathemathischen Algorithmus trainiert. Anhand dieser gelernten Qualitätswerte wird der Qualitätsentscheidungsmechanismus (Neuronales Netz oder geeigneter mathemathischer Algorithmus wie KNN ) in die Lage versetzt eine Qualitätsbestimmung wie "Guter Schweißpunkt", "Schlechter Schweißpunkt" oder "Zweifelhafter Schweißpunkt" (wie in Bild 6 dargestellt) in Abhängigkeit der gelernten Qualitätsnormen zu treffen.

Mit Hilfe des erfindungsgemäßen Verfahrens ist eine automatische Schweißpunktprüfung möglich. Damit lassen sich Schweißpunkte mit schlechter oder zweifelhafter Qualität identifizieren und gegebenenfalls läßt sich hierfür eine Nacharbeitung durchführen. Jeder Schweißpunkt läßt sich auf diese Weise prüfen. Die Qualitätsaussage ist objektiv und eindeutig.

## Patentansprüche

1. Verfahren zur Qualitätsprüfung von Schweißstellen, bei dem mit einer Kamera ein Bild der Schweißstelle (3) aufgenommen, das Bild mit Referenzbildern verglichen und aus dem Vergleich eine Aussage über die Qualität der Schweißstelle (3) gewonnen wird, **dadurch gekennzeichnet, daß** die Schweißstelle (3) längs zweier zueinander senkrechter Linien (5,6), die zumindest annähernd durch den Mittelpunkt (4) der Schweißstelle (3) verlaufen, hinsichtlich der optischen Eigenschaften untersucht wird, daß die optischen Eigenschaften in Bezug zu den Abmessungen der Schweißstelle (3) gesetzt werden und eine Qualitätsaussage durch Vergleich einer Relation von optischen Eigenschaften und Abmessungen der Schweißstelle (3) mit einer entsprechenden, anhand von Referenzbildern gewonnenen Relation geliefert wird.

2. Verfahren nach Anspruch 1, **dadurch gekennzeichnet, daß** die Referenzbilder in einem Lernprozeß gespeichert werden.

3. Verfahren nach Anspruch 2, **dadurch gekennzeichnet, daß** der Speichervorgang entsprechend der Arbeitsweise eines neuronalen Netzes durchgeführt wird.

4. Verfahren nach Anspruch 1 bis 3, **dadurch gekennzeichnet, daß** die optischen Eigenschaften die Anlaßfarben sind.

5. Verfahren nach Anspruch 4, **dadurch gekennzeichnet, daß** die optischen Eigenschaften die Maximalwerte der Anlaßfarbe sind.

6. Verfahren nach Anspruch 4 oder 5, **dadurch gekennzeichnet, daß** die Anlaßfarben als Grauwerte wiedergegeben werden.

7. Verfahren nach einem der Ansprüche 1 bis 6, **dadurch gekennzeichnet, daß** die Abmessungen der Schweißstelle anhand des Verlaufs der Anlaßfarbe über die Prüflinie (5-7) hinweg gewonnen werden.

8. Verfahren nach einem der vorhergehenden Ansprüche, **dadurch gekennzeichnet, daß** die Referenzbilder auf die verwendeten Schweißpartner bezogen werden.

## Claims

1. A method for checking the quality of weld spots, in which a picture of the weld spot (3) is taken with a camera, the picture is compared with reference pictures and from the comparison a statement is obtained about the quality of the weld spot (3), **characterised in that** the weld spot (3) is investigated with respect to optical properties along two lines (5, 6) which are perpendicular to one another and extend at least virtually through the centre (4) of the weld spot (3), **in that** the optical properties are related to the dimensions of the weld spot (3) and a quality statement is supplied by comparison of a relationship between optical properties and dimensions of the weld spot (3) with a corresponding relationship obtained with the aid of reference pictures.

2. A method according to claim 1, **characterised in that** the reference pictures are stored in a learning process.

3. A method according to claim 2, **characterised in that** the storage process is carried out according to the mode of operation of a circuit network.

4. A method according to claim 1 to 3, **characterised in that** the optical properties are the temper colours.

5. A method according to claim 4, **characterised in that** the optical properties are the maximum values of the temper colour.

6. A method according to claim 4 or 5, **characterised in that** the temper colours are reproduced as tonal values.

7. A method according to any one of claims 1 to 6, **characterised in that** the dimensions of the weld spot are obtained with the aid of the variation of the temper colour along the checking line (5 to 7).

8. A method according to any one of the preceding claims, **characterised in that** the reference pictures are related to the welded components or materials used.

## Revendications

1. Procédé de contrôle de la qualité de zones de soudage, selon lequel on prend au moyen d'un appareil photographique une image de la zone de soudage (3), on compare cette image à des images de référence et on tire de cette comparaison une information sur la qualité de la zone de soudage (3),
**caractérisé en ce que**
la zone de soudage est, le long de deux lignes (5, 6) perpendiculaires entre elles et passant au moins approximativement par le centre (4) de la zone de soudage (4), examinée en ce qui concerne ses propriétés optiques qui sont alors rapportées aux dimensions de la zone de soudage (3), et on obtient une information sur la qualité en comparant une relation existant entre les propriétés optiques et les dimensions de la zone de soudage (3) à une relation correspondante établie à partir d'images de référence.

2. Procédé selon la revendication 1,
**caractérisé en ce que**
les images de référence sont enregistrées au cours d'un processus d'apprentissage.

3. Procédé selon la revendication 2,
**caractérisé en ce que**
l'opération d'enregistrement est réalisée en correspondance avec le mode de travail d'un réseau neuronal.

4. Procédé selon les revendications 1 à 3,
**caractérisé en ce que**
les propriétés optiques sont les couleurs de revenu.

5. Procédé selon la revendication 4,
**caractérisé en ce que**
les propriétés optiques sont les valeurs maximales de la couleur de revenu.

6. Procédé selon la revendication 4 ou 5,
**caractérisé en ce que**
les couleurs de revenus sont reproduites sous forme de valeurs de gris.

7. Procédé selon une des revendications 1 à 6,
**caractérisé en ce que**
les dimensions de la zone de soudure sont obtenues à partir des courbes de la couleur de revenu le long des lignes de contrôles (5 à 7).

8. Procédé selon une des revendications précédentes,
**caractérisé en ce que**
les images de référence sont rapportées aux partenaires de soudage utilisés.
